# EUROPEAN PATENT SPECIFICATION

(11) **EP 2 855 375 B1**
(45) Date of publication and mention of the grant of the patent: **01.01.2020**
(21) Application number: 13792437.9
(22) Date of filing: 20.05.2013
(51) Int. Cl.: C02F 11/06, C02F 11/123, F23G 5/04, F23G 7/00, F23G 5/46, F23G 5/20

(54) **PLANT FOR THE TREATMENT OF SLUDGE**
ANLAGE ZUR KLÄRSCHLAMMVERARBEITUNG
INSTALLATION DE TRAITEMENT DE BOUES

(30) Priority: 25.05.2012 IT TO20120452
(43) Date of publication of application: 08.04.2015
(73) Proprietor: TM.E. S.p.A. TERMOMECCANICA ECOLOGIA, 20129 Milano (IT)
(72) Inventor: CALVANI, Stefano, I-19126 La Spezia (IT)
(74) Representative: Vitillo, Giuseppe
(86) International application number: PCT/IB2013/054124
(87) International publication number: WO 2013/182930

(56) References cited:
- WO-A2-2007/138592
- GB-A- 1 239 857
- GB-A- 2 395 478
- US-A- 2 062 025
- US-A- 5 264 009
- US-A1- 2012 111 715
- US-B1- 6 398 921

## Description

In a general aspect, the present invention relates to a plant for the treatment of sludge coming from sewage purification processes.

At present, such fresh sludge is prevalently disposed of in dumps.

However, dump disposal poses many environmental problems, such as, for example, bad smells, percolate generation, creation of habitats promoting proliferation of bacterial species, territory occupation.

One alternative to direct dump disposal is using the sludge for agricultural purposes: however, the latest regulations on this matter have drastically reduced a possible use of such sludge in this field, due to the presence therein of heavy metals and organic substances. The increasingly restrictive limitations imposed by regulations on this subject and the desire to reduce to a minimum the environmental impact deriving from disposal of sludge coming from civil purification plants make it necessary to conduct research on new treatment technologies allowing to reduce the quantity of sludge to be sent to dumps, as well as new recovery technologies capable of exploiting the caloric content of such sludge.

In the art are known some devices or methods as described in their respective documents.

For example, US 2012/111715 A1 discloses a method for reclaiming biogenic mass, in particular sludge, wherein the product to be reclaimed is first dried and then thermally decomposed in a pyrolysis reactor for the purpose of creating pyrolysis gas. The product is thermally dried in at least two drier stages arranged after one another, wherein the waste heat of the drier stage downstream of the product in the transport direction is used as process heat for the respectively upstream drier stages. It further relates to a system for reclaiming biogenic mass, in particular sludge.

WO 2007/138592 A2 is concerned with generating power using new organic fuel that is generated at wastewater purification plants in the form of sewage sludge with moisture content up to 90-95%. The world supplies this new organic fuel in very high quantities that are estimated to be more than 25-40 g of dry mass/man/day. The new composite fuel comprises a coal suspension with the new dispersed medium, which is the liquid sewage sludge. The composite fuel is introduced into a furnace for combustion and generating power.

US 6398921 B1 discloses a process for gasifying solid organic matter from wastewater sludge involves dewatering the sludge to a solids content of at least 35% by weight using a combination of centrifugation, microwave heat exchange and screw press separation. The denatured solids are than at least partially pyrolyzed by passing through a heated inclined screw auger. The pyrolysis solids, tars and gases are then gasified by exposure to a high intensity microwave field. Resulting fuel gas and char from the gasification are then separated, with the char then being combusted in a cyclonic char burner to produce vitrified ash and process heat. Fuel gases are cleaned and then burned in internal combustion engines for the generation of electricity and process heat.

GB 2395478 A discloses a method and apparatus for disposing of sewage is disclosed. An aqueous sewage liquor is separated from raw sewage and blended with a non-aqueous liquid carrier fuel. The blended fuel is supplied to the combustion chamber(s) of a compression ignition engine. Air is also supplied to the combustion chamber (s) so that the blended fuel, containing sewage, may be disposed of by combustion. The air may be enriched with oxygen. Means are also provided to control and abate prescribed substances in the exhaust gas.

In GB 1239857 A, an installation for drying and incinerating sewage sludges comprises a drier in which the sludges are dried by hot gases and a cyclone furnace for burning the sludges and generating the hot gases, a conduit conveying moist gases from the outlet of drier to mix with the combustion gases from the furnace, a second conduit conveying the mixed gases to the inlet of the drier, the length of this conduit being sufficient to ensure substantial deodorization of the gases reaching the drier inlet and a third conduit branching from the second at the drier inlet to discharge part of the mixed gases to atmosphere. The hot gases in conduit are used to reheat the moist gases in conduit in heat exchanger, and also to heat the combustion air in heat exchanger. The combustion air conveyed by conduit is used to carry the dried sludges along conduit to furnace. The drier may be a drum supported on and rotated by pneumatic tyres. Part of the dried sludges may be recycled via screw for mixing with and conditioning the moist sludges.

US 2062025 A discloses a process of reducing liquid sewage containing approximately 96% water to combustible dryness for its sanitary disposition by burning, comprising evaporating substantially from 50 to 80% of the moisture content of sewage to provide a partly de-watered fluid sludge, forming a layer of such substantially fluid sludge, and projecting heated gas through said sludge layer to reduce the same to combustible dryness, burning the dried sludge, and utilizing the heat of the products of combustion for drying additional quantities of the sewage.

The Applicant has addressed the problem of optimizing the treatment and disposal of such sludge prevalently coming from sewage purification processes, so as to significantly reduce the quantity and harmfulness thereof in dumps, while recovering the thermal energy contained therein in order to make the process autonomous, i.e. not needing the use of any external auxiliary fuel.

The present invention proposes a plant for the treatment of sludge which is self-sufficient and which can produce electric energy at the end of the cycle. One aspect of the present invention relates to a plant having the features set out in the appended claim 1.

A further aspect of the present invention relates to a method having the features set out in the appended claim 8.

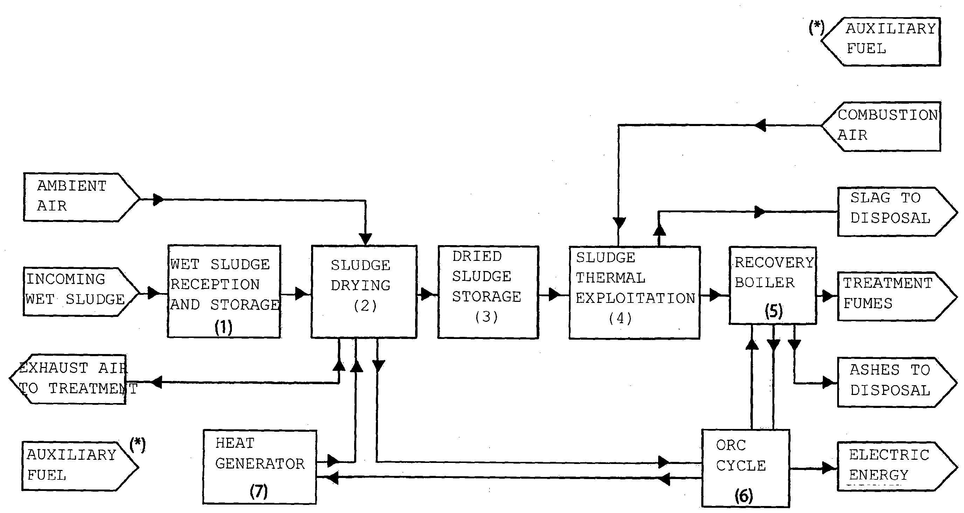

The features and advantages of the plant according to the present invention will become apparent from the following description provided by way of non-limiting example with reference to the annexed Figure 1, which shows a general block diagram of the plant according to the present invention.

With reference to the above-mentioned figure, the plant according to the present invention comprises a first sludge reception stage 1.

The plant then comprises a sludge drying stage 2, whereto the sludge is transported via conveyors from the previous section.

Said drying stage preferably comprises at least one belt-type thermal dryer operating at low temperature, which uses as a main heat source a closed circuit whose fluid comes from a cogenerative turbine of a subsequent thermal exploitation stage 4.

The wet sludge is fed to said dryer through loading means performing the task of distributing it evenly on the belt. When starting or stopping the plant, or if the thermal exploitation stage is unavailable, the temperature of the heating fluid will be maintained by a heat generator 7.

The dried sludge is extracted, preferably at a temperature lower than 50 °C, in granulated form with a dry content in excess of approx. 85%, and is then directed to a next intermediate storage section 3 by means of conveyors.

From the intermediate storage section, the dried sludge is fed to a thermal exploitation stage 4 via conveyors which are automatically controlled on the basis of the production required. In said stage, the sludge is burned at preset temperatures, e.g. in the range of 900 - 1,000 °C.

Said thermal exploitation stage comprises a system for feeding the combustion section (e.g. consisting of a rotary drum or a grid or a fluid bed). Downstream of said combustion section, the thermal exploitation stage is connected which comprises a recovery boiler 5, e.g. using a diathermal oil.

Said boiler comprises a high-temperature recovery section (HT) and a low-temperature section (LT). This configuration allows to increase the overall effectiveness of the heat recovery process as well as the efficiency of the cycle.

In said thermal exploitation stage there are inlets for the air supplies and for other components, such as support burners and containers for recovering slag and ashes. The process is automatically controlled by the plant's control system which, depending on the preset thermal load, will adjust the air flow and the quantity of sludge to be fed to this section.

The slag may be removed either dry or wet from the thermal exploitation process, depending on the slag discharge temperature.

Said thermal exploitation stage is followed by an electric energy production stage 6, which transforms into electric energy the thermal energy produced in thermal exploitation section 4 and recovered in the next recovery boiler 5.

Said stage comprises at least one turbo generator operating in an ORC cycle (Organic Rankine Cycle). According to the present invention, by combining the thermal exploitation stage, implemented by using equivalent technologies such as, for example, a fluid bed, a grid or a rotary furnace, with a thermal recovery unit and an electric energy production unit operating in a cogenerative ORC cycle, it is possible to use wet sludge coming from sewage purification processes in order to produce electric energy without needing auxiliary fuel (methane, diesel oil, etc.). Said thermal energy is transported to electric energy production stage 6 through heating of an adiabatic oil in the thermal exploitation stage 4.

The heat discharged by the power cycle during the condensing phase is recovered through said thermal recovery unit, which comprises a hot water (or an equivalent heating fluid) circuit that connects said generation stage, e.g. the condenser of said stage, to sludge drying stage 2. The heat thus recovered will have such temperature levels that it can then be used in wet sludge drying stage 2.

The present invention has verified the technical/economical feasibility for plant sizes capable of treating 30,000 - 50,000 t/year of wet sludge (wherein each treatment line can be used on a modular scale). The characteristics of the incoming sludge and those of all plant sections are summarized below:
- Type of incoming sludge: sludge coming from sewage treatment processes;
- Dry substance content in the incoming sludge: 18% to 35%;
- Caloric power of dried sludge: 10,000 kJ/kg - 16,000 kJ/kg;
- Thermal potential of each thermal treatment line (fluid bed, grid, rotary drum combustion technologies): 3,500 - 6,500 kWt;
- Operating conditions of the vector fluid coming into the sludge drying section: 90-105 °C;
- Operating conditions of the vector fluid coming out of the sludge drying section: 70 - 85 °C;
- Thermal power recovered by the cogenerative turbine: 650 - 720 kWt/t of wet sludge;
- Electric power generated by the cogenerative turbine: 140 - 165 kWe/t of wet sludge.

In short, the method for the treatment of sludge implemented by said plant basically comprises the following steps:
- storing said sludge in at least one storage silo for a predetermined time,
- drying the stored sludge by means of a low-temperature thermal treatment, wherein moisture is removed therefrom,
- subjecting the dried sludge to combustion,
- heating a diathermal fluid in a recovery boiler through the heat generated by said sludge combustion,
- transferring the heat absorbed by said diathermal fluid to a working fluid until it substantially evaporates, and expanding the evaporated fluid in a turbine operating in a cogenerative ORC cycle and driving an electric generator,
- recovering the heat generated by said turbine and making it available to the sludge drying stage.

Said step of recovering comprises the steps of:
- heating said fluid through the heat discharged by the power cycle during the condensing phase in said electric energy production stage, and
- transferring said fluid to sludge drying stage (2).

## Claims

1. Plant for the treatment of sludge coming from sewage purification processes, comprising:
• a sludge reception stage (1), for storing the sludge for a predetermined time,
• a sludge thermal drying stage (2), for removing moisture from said sludge,
• a thermal exploitation stage (4), for burning the sludge,
• an electric energy production stage (6) operating in a cogenerative ORC cycle, for transforming the thermal energy produced in said thermal exploitation stage into electric energy,
wherein said thermal exploitation stage (4) comprises a system for feeding a combustion section consisting of a rotary drum or a grid or a fluid bed, and a recovery boiler (5) using a diathermal oil downstream said thermal exploitation stage (4) for transporting said thermal energy to the electric energy production stage (6) through heating said diathermal oil in the thermal exploitation stage (4),
the plant comprises a thermal recovery unit associated with said thermal exploitation stage (4) and with said electric energy production stage (6), said thermal recovery unit comprising a hot water, or equivalent heating fluid, circuit that connects said electric energy production stage (6) to the sludge thermal drying stage (2), so that the heating fluid is heated by the heat discharged by the power cycle during the condensing phase in said electric energy production stage (6), and is made available in fully recovered form for use in the sludge thermal drying stage (2), wherein said thermal drying stage (2) comprises at least one belt-type thermal dryer operating at low temperature, which uses said hot water circuit as a heat source.

2. Plant according to claim 1, wherein said electric energy production stage (6) comprises an evaporator, in which a working fluid is heated by thermal exchange with diathermal oil, and a turbine, in which said working fluid is expanded in order to drive an electric generator.

3. Plant according to claim 1, wherein said diathermal oil recovery boiler (5) comprises a high temperature recovery section (HT) and a low-temperature recovery section (LT) fed by a common diathermal oil circuit.

4. Plant according to claim 1, wherein said thermal exploitation stage (4) and said sludge thermal drying stage (2) comprise auxiliary burners.

5. Method for the treatment of sludge in the plant according to claim 1 coming from sewage purification processes, comprising the following steps:
a) storing said sludge in at least one storage silo for a predetermined time,
b) drying the stored sludge by means of a low-temperature thermal treatment, wherein moisture is removed therefrom, subjecting the dried sludge to combustion,
c) heating a diathermal fluid in a recovery boiler through the heat generated by said sludge combustion,
d) transferring the heat absorbed by said diathermal fluid to a working fluid until it substantially evaporates, and expanding the evaporated fluid in a turbine operating in a cogenerative ORC cycle and driving an electric generator,
e) recovering the heat generated by said turbine by heating a heating fluid, and making it available to the sludge drying stage,
**characterized in that** said step of recovering comprises the steps of:
f) heating said heating fluid through the heat discharged by the power cycle during the condensing phase in said electric energy production stage, and
g) transferring said fluid to the sludge drying stage (2).

## Patentansprüche

1. Anlage zur Behandlung von Schlamm aus Abwasserreinigungsverfahren, umfassend:
• eine Schlammannahmestufe (1) zum Speichern des Schlamms für eine vorbestimmte Zeit,
• eine thermische Schlammtrocknungsstufe (2) zum Entfernen von Feuchtigkeit aus dem Schlamm,
• eine thermische Verwertungsstufe (4) zum Verbrennen des Schlamms,
• eine elektrische Energieerzeugungsstufe (6), die in einem kogenerativen ORC-Zyklus arbeitet, um die in der thermischen Verwertungsstufe erzeugte thermische Energie in elektrische Energie umzuwandeln,
wobei die thermische Verwertungsstufe (4) ein System zur Zuführung zu einem Verbrennungsabschnitt umfasst, bestehend aus einer Drehtrommel oder einem Gitter oder einem Wirbelbett, und einen Rückgewinnungskessel (5) unter Verwendung eines diathermischen Öls stromabwärts von der thermischen Verwertungsstufe (4) zum Transportieren der thermischen Energie zur elektrischen Energieerzeugungsstufe (6) durch Erwärmen des diathermischen Öls in der thermischen Verwertungsstufe (4) umfasst,
die Anlage eine Wärmerückgewinnungseinheit umfasst, die der thermischen Verwertungsstufe (4) und der elektrischen Energieerzeugungsstufe (6) zugeordnet ist, wobei die Wärmerückgewinnungseinheit einen Warmwasseroder gleichwertigen Heizfluidkreis umfasst, der die elektrische Energieerzeugungsstufe (6) mit der thermischen Schlammtrocknungsstufe (2) verbindet, so dass das Heizfluid durch die vom Leistungszyklus während der Kondensationsphase in der elektrischen Energieerzeugungsstufe (6) abgegebene Wärme erwärmt und in vollständig zurückgewonnener Form zur Verwendung in der thermischen Schlammtrocknungsstufe (2) bereitgestellt wird,
wobei die thermische Trocknungsstufe (2) zumindest einen thermischen Bandtrockner umfasst, der bei niedriger Temperatur arbeitet und den Warmwasserkreislauf als Wärmequelle verwendet.

2. Anlage nach Anspruch 1, wobei die elektrische Energieerzeugungsstufe (6) einen Verdampfer, in dem ein Arbeitsfluid durch Wärmeaustausch mit diathermischem Öl erwärmt wird, und eine Turbine umfasst, in der das Arbeitsfluid expandiert wird, um einen elektrischen Generator anzutreiben.

3. Anlage nach Anspruch 1, wobei der diathermische Rückgewinnungskessel (5) einen Hochtemperatur-Rückgewinnungsabschnitt (HT) und einen Niedertemperatur-Rückgewinnungsabschnitt (LT) umfasst, die von einem gemeinsamen diathermischen Ölkreislauf gespeist werden.

4. Anlage nach Anspruch 1, wobei die thermische Verwertungsstufe (4) und die thermische Schlammtrocknungsstufe (2) Hilfsbrenner umfassen.

5. Verfahren zur Behandlung von Schlamm in der Anlage nach Anspruch 1 aus Abwasserreinigungsverfahren, umfassend die folgenden Schritte:
a) Lagern des Schlamms in mindestens einem Lagersilo für eine vorbestimmte Zeit,
b) Trocknen des gelagerten Schlamms mittels einer Niedertemperatur-Wärmebehandlung, wobei dem Schlamm Feuchtigkeit entzogen wird, und wobei der getrocknete Schlamm einer Verbrennung unterworfen wird,
c) Erwärmen einer diathermischen Flüssigkeit in einem Rückgewinnungskessel durch die durch die Schlammverbrennung erzeugte Wärme,
d) Übertragen der von dem diathermischen Fluid absorbierten Wärme auf ein Arbeitsfluid, bis es im Wesentlichen verdampft, und Ausdehnen des verdampften Fluids in einer Turbine, die in einem kogenerativen ORC-Zyklus arbeitet und einen elektrischen Generator antreibt,
e) Rückgewinnung der von der Turbine erzeugten Wärme durch Erwärmen eines Heizfluids und Bereitstellung für die Schlammtrocknungsstufe,
**dadurch gekennzeichnet, dass** der Schritt der Rückgewinnung die Schritte umfasst:
f) Erwärmen des Heizfluids durch die vom Leistungszyklus während der Kondensationsphase in der Elektrikerproduktionsstufe abgegebene Wärme und
g) Übertragen des Fluids auf die Schlammtrocknungsstufe (2).

## Revendications

1. Installation pour le traitement de boues provenant des processus d'épuration d'eaux usées, comprenant :
• une partie de réception de boues (1), pour stocker les boues pendant une durée prédéfinie,
• une partie de séchage thermique de boues (2), pour éliminer l'humidité desdites boues,
• une partie d'exploitation thermique (4), pour brûler les boues,
• une partie de production d'énergie électrique (6) fonctionnant selon un cycle de cogénération ORC, pour transformer l'énergie thermique produite dans ladite partie d'exploitation thermique en énergie électrique,
dans laquelle ladite partie d'exploitation thermique (4) comprend un système d'alimentation d'une section de combustion constituée d'un tambour rotatif ou d'une grille ou d'un lit fluidisé, et une chaudière de récupération (5) utilisant une huile diathermique en aval de ladite partie d'exploitation thermique (4) pour transporter ladite énergie thermique vers la partie de production d'énergie électrique (6) par chauffage de ladite huile diathermique dans la partie d'exploitation thermique (4),
l'installation comprend une unité de récupération thermique associée à ladite partie d'exploitation thermique (4) et à ladite partie de production d'énergie électrique (6), ladite unité de récupération thermique comprenant un circuit d'eau chaude, ou de fluide chauffant équivalent, qui relie ladite partie de production d'énergie électrique (6) à la partie de séchage thermique (2) des boues, de telle sorte que le fluide chauffant est chauffé par la chaleur libérée par le cycle d'alimentation pendant la phase de condensation dans ladite partie de production d'énergie électrique (6), et est mis à disposition sous forme entièrement récupérée pour utilisation dans la partie de séchage thermique des boues (2), dans laquelle ladite partie de séchage thermique (2) comprend au moins un sécheur thermique du type à courroie fonctionnant à basse température, qui utilise ledit circuit d'eau chaude comme source de chaleur.

2. Installation selon la revendication 1, dans laquelle ladite partie de production d'énergie électrique (6) comprend un évaporateur, dans laquelle un fluide actif est chauffé par échange thermique avec de l'huile diathermique, et une turbine, dans laquelle ledit fluide actif est expansé afin d'entraîner un générateur électrique.

3. Installation selon la revendication 1, dans laquelle ladite chaudière de récupération d'huile diathermique (5) comprend une section de récupération à haute température (HT) et une section de récupération à basse température (LT) alimentée par un circuit commun d'huile diathermique.

4. Installation selon la revendication 1, dans laquelle ladite partie d'exploitation thermique (4) et ladite partie de séchage thermique des boues (2) comprennent des brûleurs auxiliaires.

5. Procédé pour le traitement de boues dans l'installation selon la revendication 1, provenant de processus de purification d'eaux usées, comprenant les étapes suivantes :
a) le stockage desdites boues dans au moins un silo de stockage pendant une durée prédéfinie,
b) le séchage des boues stockées au moyen d'un traitement thermique à basse température, l'humidité étant éliminée de ces boues, la boue séchée étant soumise à une combustion,
c) le chauffage d'un fluide diathermique dans une chaudière de récupération par la chaleur générée par ladite combustion de boues,
d) le transfert de la chaleur absorbée par ledit fluide diathermique à un fluide actif jusqu'à ce qu'il s'évapore sensiblement, et l'expansion du fluide évaporé dans une turbine fonctionnant dans un cycle de cogénération ORC et entraînant un générateur électrique,
e) la récupération de la chaleur générée par ladite turbine en chauffant un fluide chauffant, et la mise à disposition de la partie de séchage des boues,
**caractérisée en ce que** ladite étape de récupération comprend les étapes de :
g) le chauffage dudit fluide chauffant par l'intermédiaire de la chaleur libérée par le cycle d'alimentation pendant la phase de condensation dans ladite partie de production d'énergie électrique, et
g) le transfert dudit fluide à la partie de séchage des boues (2).
